# EUROPÄISCHE PATENTSCHRIFT

(11) **EP 2 917 032 B1**
(45) Veröffentlichungstag und Bekanntmachung des Hinweises auf die Patenterteilung: **11.01.2017**
(21) Anmeldenummer: 13786673.7
(22) Anmeldetag: 07.11.2013
(51) Int. Cl.: B32B 9/00, F16J 15/08

(54) **SCHICHTVERBUNDWERKSTOFF**
LAYERED COMPOSITE MATERIAL
MATÉRIAU COMPOSITE STRATIFIÉ

(30) Priorität: 08.11.2012 DE 102012220310
(43) Veröffentlichungstag der Anmeldung: 16.09.2015
(73) Patentinhaber: SGL Carbon SE, 65201 Wiesbaden (DE)
(72) Erfinder: FROMMELT, Sebastian, 86707 Westendorf (DE); HINGST, Karl, 86157 Augsburg (DE); SCHRÖDER, Markus, 86424 Dinkelscherben (DE); MAYR, Richard, 86672 Thierhaupten (DE); STETTBERGER, Roland, 86695 Nordendorf (DE)
(86) Internationale Anmeldenummer: PCT/EP2013/073232
(87) Internationale Veröffentlichungsnummer: WO 2014/072382

(56) Entgegenhaltungen:
- WO-A1-2008/077583
- US-A1- 2006 046 025
- US-A1- 2012 068 414

## Beschreibung

Die vorliegende Erfindung betrifft einen Schichtverbundwerkstoff, der wenigstens zwei Lagen Graphitfolie umfasst.

Derartige Schichtverbundwerkstoffe werden beispielsweise zur Herstellung von Dichtungen für Hochtemperaturöfen, bei deren Betrieb die Dichtungen beispielsweise Temperaturen von mehr als 600°C oder gar mehr als 1.800°C ausgesetzt sind, oder zur Herstellung von Dichtungen für Anlagen in der chemischen Industrie, bei deren Betrieb die Dichtungen häufig hoch-korrosiver Umgebung ausgesetzt sind, verwendet. Die darin eingesetzten Graphitfolien werden üblicherweise durch Expandieren von Graphit, und zwar insbesondere von Naturgraphit, und anschließendes Komprimieren der expandierten Partikel gefertigt. Durch den Vorgang des Komprimierens werden die einzelnen Graphitpartikel miteinander verzahnt, sodass sich ohne Zusatz von Bindemitteln flächige Graphitkörper in Form von Folien oder Platten herstellen lassen. Solche Graphitkörper zeichnen sich insbesondere durch eine hohe Temperatur- und Korrosionsbeständigkeit sowie durch eine geringe Durchlässigkeit gegenüber Flüssigkeiten und Gasen aus.

Allerdings lassen sich derartige Graphitfolien prozessbedingt nicht in beliebig großen Dicken herstellen. Bei Anwendungen, in denen eine entsprechende Dicke notwendig ist, wie beispielsweise bei der Verwendung als Dichtung in einem Hochtemperaturofen, kommt daher lediglich ein mehrlagiger Aufbau in Betracht. Die US 2012068414 A1 beschreibt eine Verbundplatte, umfassend einen alternierenden Stapel aus (n + 1) flexiblen Graphitfolien und (n) perforierten metallischen Verstärkungsfolien mit Sporen, die in die Graphitfolie eingreifen.

Die US 2006046025 A1 beschreibt ein Verbunddichtungsmaterial mit mindestens zwei Schichten die miteinander verbunden sind, wobei zumindest eine erste dieser Schichten eine Graphitfolie ist, die mit einer zweiten Schicht aus Graphitfolie, Fluorpolymer oder Papier mittels Verklebung mit einer Fluorpolymerschicht verbunden ist.

Die WO 2008077583 A1 beschreibt ein Dichtungsmaterial umfassend einen flächigen Schichtverbund aus mindestens zwei Lagen einer Graphitfolie im Wechsel mit mindestens einer Metalleinlage.

Um bei einem solchen mehrlagigen Aufbau einen stabilen Verbund zu gewährleisten, welcher beispielsweise erforderlich ist, um den Verbund von dem Zeitpunkt von dessen Herstellung bis zu dessen Einbau am Bestimmungsort handhaben zu können, werden die einzelnen Folienlagen üblicherweise miteinander verklebt. Allerdings ist das Verkleben mit relativ aufwändigen Arbeitsschritten verbunden. Zudem besteht dabei das Problem, dass bei einem Klebstoffeinsatz eine Carbonisierung und Graphitierung des betreffenden Bauteils nach der Verklebung erforderlich ist, um den bei den gängigen Anwendungen geforderten Reinheitsgrad zu erzielen, was jedoch mit einem beträchtlichen Zusatzaufwand verbunden ist. Außerdem kann es bei der zum Carbonisieren und Graphitieren erforderlichen thermischen Behandlung des Folienstapels in einem entsprechenden Ofen leicht zu einer Blasenbildung in dem Material kommen, was bei vielen Anwendungen inakzeptabel ist.

Es ist daher eine Aufgabe der vorliegenden Erfindung, einen stabilen und fluiddichten, jedoch leicht herstellbaren Schichtverbundwerkstoff aus wenigstens zwei Graphitfolienlagen anzugeben.

Erfindungsgemäß wird diese Aufgabe gelöst durch einen Schichtverbundwerkstoff mit den Merkmalen des Anspruchs 1 und insbesondere dadurch, dass wenigstens zwei Lagen Graphitfolie des Schichtverbundwerkstoffs mittels wenigstens eines zumindest formschlüssig in die beiden Lagen eingreifenden Verbindungsstifts miteinander verbunden sind.

Die einzelnen Folienlagen werden also nicht, wie in dem Stand der Technik üblich, verklebt, sondern verstiftet. Dadurch entfällt nicht nur das aufwändige Auftragen der Klebstoffschicht(en), sondern auch das Carbonisieren und Graphitieren, sodass der Schichtverbundwerkstoff bei der Fertigung keiner zusätzlichen thermischen Behandlung ausgesetzt werden muss und demzufolge das Risiko einer Blasenbildung entfällt. Unter einem Stift wird im Sinne der vorliegenden Erfindung ein längliches Element, wie insbesondere ein Bolzen, Zapfen, Keil, Kegel oder dergleichen, verstanden, wobei die restliche Geometrie und insbesondere die Querschnittsform im Prinzip beliebig ist. Je nach der Form, der Größe und dem Ausgangsmaterial kann der Verbindungsstift durch Drehen, Schleifen, Stanzen, Schneiden, Pressen oder ähnliche Verfahren hergestellt werden.

Ein besonderer Vorteil der vorliegenden Erfindung besteht darin, dass ein Verbindungsstift leicht und kostengünstig herstellbar ist. Aufgrund des formschlüssigen Eingriffs ist jedoch trotzdem eine hohe Verbindungsstabilität gewährleistet. Die vorliegende Erfindung beruht unter anderem auf der Erkenntnis, dass ein formschlüssiges Verstiften ausreicht, um den Stapel aus flexiblen und vergleichsweise dünnen Graphitfolienlagen bis zur Montage sicher zu handhaben - es also gar nicht nötig ist, die Lagen vollflächig miteinander zu verkleben. Sobald das durch den Folienstapel gebildete Dichtungsbauteil am Bestimmungsort eingebaut ist, besteht aufgrund der senkrecht zu der Stapeloberfläche wirkenden Klemmkräfte ohnehin keine Gefahr mehr, dass der Stapel auseinanderfällt. Der dann im Prinzip funktionslose Verbindungsstift beeinträchtigt aufgrund seiner länglichen Ausgestaltung die Durchlässigkeit und das Wärmeleitungsverhalten der Dichtung, wenn überhaupt, dann nur in relativ geringem Ausmaß.

Dabei ist es von Bedeutung, dass bei dem Vorliegen von mehr als zwei Lagen Graphitfolie in einem Schichtverbundwerkstoff wenigstens zwei Lagen durch einen Verbindungsstift miteinander verbunden sind. Wenn also der Schichtverbundwerkstoff z.B. vier Lagen Graphitfolie aufweist, reicht es prinzipiell aus, dass lediglich zwei Lagen durch einen Verbindungsstift miteinander verbunden sind. Um eine hohe Gesamtstabilität des Schichtverbundwerkstoffs zu erreichen, ist es allerdings bevorzugt, dass alle vorhandenen Lagen Graphitfolie unter Verwendung wenigstens eines Verbindungsstifts miteinander verbunden sind.

Eine bevorzugte Ausgestaltung der vorliegenden Erfindung sieht vor, dass die wenigstens zwei Lagen Graphitfolie mittels wenigstens eines form- und kraftschlüssig in die beiden Lagen eingreifenden Verbindungsstifts miteinander verbunden sind. Durch die Kombination von formschlüssiger und kraftschlüssiger Verbindung kann die Stabilität des Verbunds weiter erhöht werden.

Vorzugsweise verläuft die Längsachse des wenigstens einen Verbindungsstifts rechtwinklig oder schräg zu der flächigen Erstreckung des Schichtverbundwerkstoffs. Mit anderen Worten erstreckt sich der Verbindungsstift bevorzugt nicht parallel zu der Oberfläche des Folienstapels, sondern quer zu dieser. Beispielsweise kann die Längsachse um etwa 10° gegenüber der Oberflächennormale geneigt sein. Es sind dann keine von dem Verbindungsstift abstehenden Eingriffselemente notwendig, da die formschlüssige Verbindung zwischen den wenigstens zwei Lagen durch den Stiftkörper selbst bewerkstelligt wird. Sollte es die Anwendung erfordern, können an dem Verbindungsstift gleichwohl zusätzliche Eingriffselemente vorgesehen sein.

Gemäß einer weiteren bevorzugten Ausgestaltung der vorliegenden Erfindung sind die wenigstens zwei Lagen Graphitfolie durch wenigstens zwei Verbindungsstifte miteinander verbunden, deren Längsachsen in Bezug auf die flächige Erstreckung des Schichtverbundwerkstoffs unterschiedlich geneigt sind. Die Längsachsen können hierbei hinsichtlich des Neigungswinkels und/oder hinsichtlich der Neigungsrichtung voneinander abweichen. Durch solche unterschiedlich geneigten Verbindungsstifte kann der Zusammenhalt des Schichtverbundwerkstoffs in besonders hohem Ausmaß erreicht werden.

Weiter ist es bevorzugt, dass zumindest ein Ende des wenigstens einen Verbindungsstifts um einen Pufferabstand gegenüber der nächstliegenden Außenfläche des Schichtverbundwerkstoffs zurückversetzt ist. Das heißt, der Verbindungsstift durchstößt vorzugsweise nicht die Oberflächen der äußersten Lagen, sondern erstreckt sich lediglich teilweise durch den Schichtverbundwerkstoff hindurch. Bevorzugt ist der Verbindungsstift vollständig in dem Verbundwerkstoff eingebettet. Der Pufferabstand zwischen dem Ende des Stifts und der Außenfläche des Schichtverbundwerkstoffs beträgt hierbei gemäß einer besonders bevorzugten Ausführungsform der vorliegenden Erfindung mindestens 1 mm. Dies trägt dem Umstand Rechnung, dass bei der Verwendung des Schichtverbundwerkstoffs als Dichtung das Material komprimiert werden kann, wobei durch den Pufferabstand verhindert wird, dass der Verbindungsstift in unerwünschter Weise direkt mit Druck beaufschlagt wird. Zudem können dadurch besonders vorteilhaft Wärmebrücken minimiert oder gar ganz verhindert werden.

Prinzipiell kann sich der Verbindungsstift auch durch den gesamten Schichtverbundwerkstoff hindurch erstrecken, wobei es hierbei bevorzugt ist, dass der Verbindungsstift zumindest bündig mit den Außenflächen des Schichtverbundwerkstoffs abschließt, um eine ausreichende Stabilität sicherzustellen und die Kompressibilität des Gesamtaufbaus nicht zu beeinträchtigen. Da die Querschnittsfläche des Verbindungsstifts üblicherweise wesentlich kleiner ist als die Gesamtoberfläche des Folienstapels, ist der auch in diesem Fall die Ausbildung von Wärmebrücken aufgrund des Stiftes nur relativ gering.

In Weiterbildung der vorliegenden Erfindung wird es ferner vorgeschlagen, dass jeweils zwei der wenigstens zwei durch wenigstens einen Verbindungsstift verbundenen Lagen aus Graphitfolie direkt aneinander angrenzen. Es ist also bevorzugt, dass zwischen benachbarten Lagen keine Zwischenschicht oder Trennschicht angeordnet ist, da dies einen besonders einfachen Aufbau ermöglicht. Jedoch ist dies nicht zwingend; d.h., je nach Anwendung kann der Schichtverbundwerkstoff auch zusätzliche Lagen aus anderen Materialien umfassen, wie z.B. Verstärkungslagen aus Blech, welche jeweils zwischen zwei Lagen Graphitfolie eingefügt sind.

Gemäß einer weiteren bevorzugten Ausgestaltung der vorliegenden Erfindung sind die wenigstens zwei Lagen Graphitfolie ausschließlich mittels des wenigstens einen Verbindungsstifts und insbesondere verklebungsfrei miteinander verbunden. Dies ermöglicht eine besonders einfache und kostengünstige Herstellung.

Zudem ist es bevorzugt, dass die wenigstens zwei Lagen Graphitfolie vollständig aus komprimiertem expandiertem, insbesondere bindemittelfreiem, Graphit bestehen.

Eine weitere bevorzugte Ausführungsform der vorliegenden Erfindung sieht es vor, dass die wenigstens zwei Lagen Graphitfolie und bevorzugt jede der wenigstens zwei Lagen Graphitfolie eine Dicke zwischen 0,2 mm und 10 mm und bevorzugt zwischen 1 mm und 3 mm aufweisen/aufweist. Graphitfolien in dieser Folienstärke sind durch gängige Verfahren leicht herstellbar.

Eine weitere Ausführungsform der Erfindung sieht vor, dass die wenigstens zwei Lagen Graphitfolie und bevorzugt jede der wenigstens zwei Lagen Graphitfolie eine Rohdichte zwischen 0,5 g/cm³ und 2 g/cm³ und besonders bevorzugt zwischen 0,7 g/cm³ und 1,3 g/cm³ aufweisen/aufweist. Solche Graphitfolien eignen sich in besonderer Weise für hochtemperaturbeständige und korrosionsresistente Dichtungen.

Gemäß einer weiteren bevorzugten Ausführungsform der vorliegenden Erfindung ist es vorgesehen, dass der Schichtverbundwerkstoff eine Gesamtdicke zwischen 2 mm und 50 mm, bevorzugt zwischen 4 mm und 40 mm und besonders bevorzugt zwischen 5 mm und 30 mm aufweist. Schichtverbundwerkstoffe in dieser Stärke haben sich für die eingangs genannten Anwendungen als ganz besonders günstig erwiesen.

In Weiterbildung des Erfindungsgedankens wird es außerdem vorgeschlagen, dass der Schichtverbundwerkstoff wenigstens 3, bevorzugt zwischen 3 und 50, besonders bevorzugt 3 bis 5 und ganz besonders bevorzugt 4 oder 5 Lagen Graphitfolie umfasst.

Die wenigstens drei Lagen Graphitfolie können hierbei auch mittels wenigstens zwei Verbindungsstiften miteinander verbunden sein, wobei jeder der wenigstens zwei Verbindungsstifte lediglich in zwei benachbarte Lagen der wenigstens drei Lagen Graphitfolie eingreift. Durch diese Maßnahme können insbesondere unerwünschte Wärmebrücken auf ein Minimum reduziert oder gar ganz vermieden werden.

Um diesen Effekt sogar noch zu verstärken, können die Positionen der wenigstens zwei Verbindungsstifte außerdem bezogen auf die flächige Erstreckung des Schichtverbundwerkstoffs zueinander versetzt sein.

Gute Ergebnisse werden insbesondere erhalten, wenn der wenigstens eine Verbindungsstift aus einem Material gefertigt ist, das aus der Gruppe ausgewählt ist, welche aus Kohlenstoff, Graphit, Kohlenstofffasern enthaltenden Verbundwerkstoffen, Filzen, Siliciumcarbid, Metallen, Keramikwerkstoffen und beliebigen Kombinationen von zwei oder mehr der vorgenannten Materialien besteht. Dabei ist es bevorzugt, wenn der Verbindungsstift vollständig aus einem Kohlenstofffasern enthaltenden Verbundwerkstoff, Graphit oder Stahl besteht.

Gemäß einer speziellen Ausgestaltung der Erfindung ist der wenigstens eine Verbindungsstift aus Graphitfolie gefertigt. Dadurch wird eine hohe Homogenität des Schichtverbundwerkstoffs erzielt.

Gemäß einer weiteren bevorzugten Ausgestaltung der vorliegenden Erfindung weist der wenigstens eine Verbindungsstift eine zylindrische Form auf; d.h., die Querschnittsform des Verbindungsstifts ist vorzugsweise kreisrund. Derartige Verbindungsstifte sind besonders einfach und kostengünstig herstellbar. Grundsätzlich kann der Verbindungsstift jedoch auch eine andere Form aufweisen, wie beispielsweise eine elliptische, vierkantige oder eine hexagonale Querschnittsform.

Weiterhin kann der wenigstens eine Verbindungsstift bezogen auf seine Längsachse zumindest abschnittsweise verjüngt sein und beispielsweise eine konische Form aufweisen. Eine solche verjüngte Ausgestaltung kann das Eintreiben des Verbindungsstifts in den Folienstapel erleichtern und das Herstellen einer kraftschlüssigen Verbindung unterstützen.

Zudem kann der wenigstens eine Verbindungsstift auch eine strukturierte Oberfläche aufweisen. Beispielsweise könnte die Oberfläche des Verbindungsstifts zumindest bereichsweise geriffelt oder gezackt sein. Eine Strukturierung kann aber auch lediglich in einer vergleichsweise hohen Rauheit der Stiftoberfläche bestehen. Gegenüber einer glatten Stiftoberfläche ermöglicht eine Ausführung des Verbindungsstiftes mit strukturierter Oberfläche einen erhöhten Reibungswiderstand und somit einen verbesserten Zusammenhalt der Lagen.

Sofern eine besonders hohe Verbindungsfestigkeit gewünscht ist, kann der wenigstens eine Verbindungsstift mit Vorteil ferner ein Gewinde und/oder einen Widerhaken aufweisen.

Gemäß einer weiteren Ausführungsform der vorliegenden Erfindung weist der wenigstens eine Verbindungsstift einen Außendurchmesser zwischen 1 mm und 5 mm, bevorzugt zwischen 1,5 mm und 4 mm und besonders bevorzugt zwischen 2 mm und 3 mm auf. Weiterhin kann der wenigstens eine Verbindungsstift eine Länge zwischen 1 mm und 20 mm und bevorzugt zwischen 2 mm und 5 mm aufweisen. Die Dimensionierung des Verbindungsstifts richtet sich im Einzelnen nach den Abmessungen des Gesamtaufbaus und der erforderlichen Verbindungsfestigkeit.

Grundsätzlich ist es jedoch bevorzugt, dass der wenigstens eine Verbindungsstift eine Länge aufweist, welche geringer ist als die Summe der Dicken der durch den Verbindungsstift miteinander verbundenen Lagen Graphitfolie. Dadurch werden unerwünschte Wärmeleitungsverluste minimiert und eine direkte Druckbelastung des Verbindungsstifts bei einer Kompression des Schichtverbundwerkstoffs verhindert.

Um einen zuverlässigen Formschluss zu ermöglichen, kann in jeder der wenigstens zwei Lagen Graphitfolie zudem eine Aussparung zur Aufnahme des wenigstens einen Verbindungsstifts vorgesehen sein. Die Aussparung kann vor dem Verbinden der Lagen durch Bohren oder Fräsen erzeugt werden. Alternativ dazu kann auch ein Verzicht auf jegliche Aussparungen in Erwägung gezogen werden, um die entsprechenden Arbeitsschritte, wie Vorbohren, einzusparen. Der Verbindungsstift kann dann z.B. mittels eines Schussapparats in den Folienstapel geschossen werden.

Zur weiteren Erhöhung der Stabilität kann der wenigstens eine Verbindungsstift unter Ausbildung eines Presssitzes in den Aussparungen aufgenommen sein. Ein im Presssitz befindlicher Verbindungsstift ermöglicht eine Kombination aus formschlüssiger und kraftschlüssiger Verbindung.

Gemäß einer weiteren bevorzugten Ausführungsform der vorliegenden Erfindung ist es vorgesehen, dass wenigstens eine der Aussparungen als Sackloch ausgebildet ist. Dies kommt der Minimierung von Wärmebrücken entgegen.

Ein weiterer Gegenstand der vorliegenden Erfindung ist ein Bauteil, insbesondere eine Dichtung, welches wenigstens einen wie vorstehend beschrieben ausgestalteten Schichtverbundwerkstoff umfasst.

Zudem betrifft die vorliegende Erfindung die Verwendung eines wie vorstehend beschrieben ausgestalteten Schichtverbundwerkstoffs oder Bauteils als Dichtung, insbesondere bei einer Temperatur von mindestens 600°C, bevorzugt von mindestens 800°C, besonders bevorzugt von mindestens 1000°C und ganz besonders bevorzugt von mindestens 1800°C.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine seitliche Schnittansicht eines erfindungsgemäßen Schichtverbundwerkstoffs, welcher fünf Lagen Graphitfolie umfasst.
- Fig. 2a-2e: Draufsichten auf den Schichtverbundwerkstoff gemäß der Fig. 1, welche die Positionierung von die einzelnen Lagen Graphitfolie verbindenden Verbindungsstiften verdeutlicht.

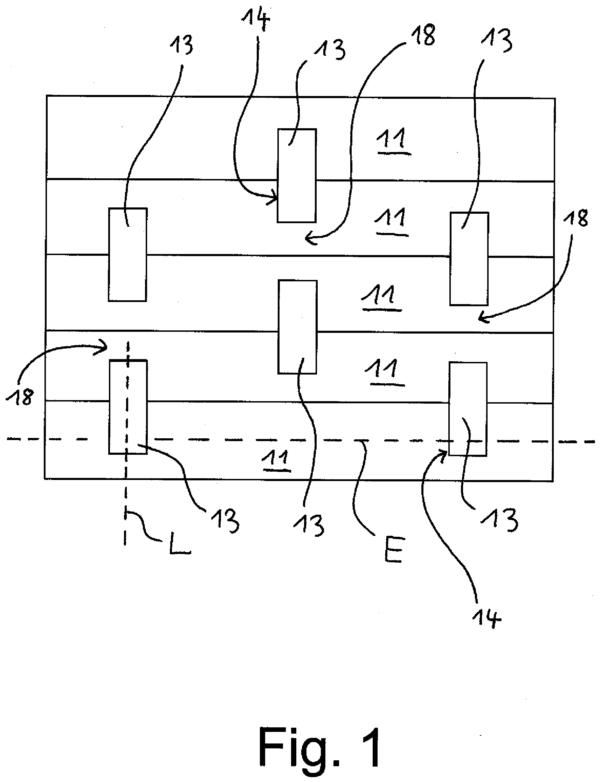

Gemäß der Fig. 1 ist eine erfindungsgemäße Hochtemperaturdichtung als Schichtverbund aufgebaut und umfasst fünf übereinander gestapelte Lagen 11 in Form von Graphitfolienplatten. Die einzelnen Lagen 11 sind jeweils 3 mm dick und bestehen vollständig aus komprimiertem expandiertem Naturgraphit. Beispielsweise kann eine Graphitfolie der Marke Sigraflex®, Materialtyp L30010C, verwendet werden. Die fünf Lagen 11 sind unter Verwendung mehrerer zylindrischer Verbindungsstifte 13 zu einer die Hochtemperaturdichtung bildenden Gesamtplatte zusammengesteckt. Dabei sind die Verbindungsstifte 13 aus einem Kohlenstofffasern enthaltenden Verbundwerkstoff oder aus Graphit gefertigt und auf eine Länge von 5 mm bearbeitet. In dem vorliegenden Ausführungsbeispiel beträgt der Außendurchmesser der Verbindungsstifte 13 3 mm. Dabei verläuft die Längsachse L der Verbindungsstifte 13 bei der dargestellten Ausführungsform rechtwinklig zu der Lagenebene E, d.h. zu der flächigen Erstreckung der Lagen 11.

Zur Herstellung des Schichtverbundwerkstoffes werden in die Lagen 11 mittels eines 3 mm-Stahlbohrers Sacklöcher 14 zur Aufnahme der Verbindungsstifte 13 gebohrt. Anschließend werden die Lagen 11 zusammengesteckt, wobei jeweils ein Satz von vier Verbindungsstiften 13 in die zugehörigen Sacklöcher 14 einer Lage 11 eingefügt wird und eine nachfolgende Lage 11 mit entsprechend positionierten Sacklöchern 14 auf die untere Lage 11 gelegt wird.

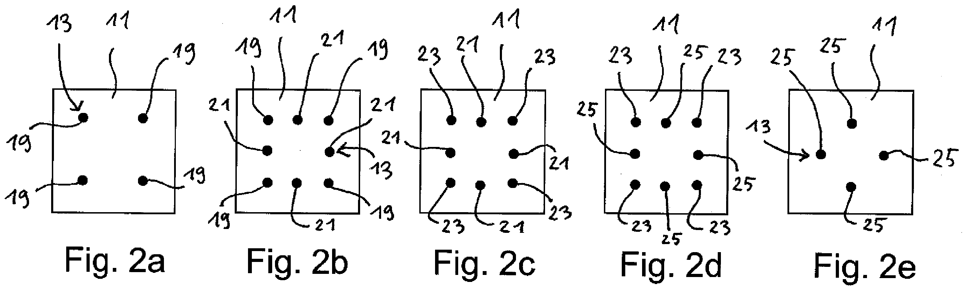

Da die Dicke zweier aufeinandergestapelter Lagen 11 6 mm beträgt, die Verbindungsstifte 13 jedoch lediglich 5 mm lang sind, ergeben sich Pufferzonen 18, welche eine direkte Druckbeaufschlagung der Verbindungsstifte 13 verhindern. Zudem ändern sich die Positionen der Verbindungsstifte 13 von Lage zu Lage, wie nachfolgend unter Bezugnahme auf die Fig. 2a-2e näher erläutert wird.

In der ersten, d.h. untersten Lage 11 sitzen gemäß der Fig. 2a vier Verbindungsstifte 13 an den mit 19 gekennzeichneten Positionen. Diese vier Verbindungsstifte 13 dienen ausschließlich der Verbindung zwischen der untersten Lage 11 und der von unten gesehen zweiten Lage 11. Diese zweite Lage 11 ist in der Fig. 2b dargestellt, wobei verdeutlicht ist, dass die Positionen 21 derjenigen Verbindungsstifte 13, welche der Verbindung zwischen der nachfolgenden dritten Lage 11 und der zweiten Lage 11 dienen, gegenüber den Positionen 19 derjenigen Verbindungsstifte 13, welche der Verbindung zwischen der untersten Lage 11 und der zweiten Lage 11 dienen, versetzt sind. Der Versatz ist derart gewählt, dass ein möglichst großer Abstand zwischen den Positionen 19 und den Positionen 21 besteht.

Gemäß der Fig. 2c decken sich die Positionen 23 derjenigen Verbindungsstifte 13, welche der Verbindung zwischen einer nachfolgenden vierten Lage 11 und der dritten Lage 11 dienen, in der Draufsicht mit den Positionen 19 derjenigen Verbindungsstifte 13, welche der Verbindung zwischen der untersten Lage 11 und der zweiten Lage 11 dienen. Aus den Fig. 2d und 2e geht ferner hervor, dass sich auch die Positionen 25 derjenigen Verbindungsstifte 13, welche der Verbindung zwischen der fünften und letzten Lage 11 und der vierten Lage 11 dienen, in der Draufsicht mit den Positionen 21 derjenigen Verbindungsstifte 13 decken, welche der Verbindung zwischen der zweiten Lage 11 und der dritten Lage 11 dienen.

Die versetzte Anordnung der Verbindungsstifte 13 gemäß den Fig. 2a-2e verhindert bei der Anwendung des Schichtverbundwerkstoffs Wärmebrücken und minimiert die Gasdurchlässigkeit der Hochtemperaturdichtung. Insgesamt ermöglicht die Erfindung die Bereitstellung einer mehrlagigen Graphitdichtung von hoher Temperaturbeständigkeit und Korrosionsfestigkeit ohne die Notwendigkeit aufwändiger Verklebungs-, Carbonisier- und Graphitierprozesse.

### Bezugszeichenliste

- 11: Lage
- 13: Verbindungsstift
- 14: Sackloch
- 18: Pufferzone
- 19: Positionen der Verbindungsstifte zur Verbindung der ersten und der zweiten Lage
- 21: Positionen der Verbindungsstifte zur Verbindung der zweiten und der dritten Lage
- 23: Positionen der Verbindungsstifte zur Verbindung der dritten und der vierten Lage
- 25: Positionen der Verbindungsstifte zur Verbindung der vierten und der fünften Lage

- L: Längsachse
- E: Lagenebene

## Patentansprüche

1. Schichtverbundwerkstoff umfassend wenigstens zwei Lagen (11) Graphitfolie,
**dadurch gekennzeichnet,dass**
wenigstens zwei Lagen (11) Graphitfolie mittels wenigstens eines zumindest formschlüssig in die beiden Lagen (11) eingreifenden Verbindungsstifts (13) miteinander verbunden sind.

2. Schichtverbundwerkstoff nach Anspruch 1,
**dadurch gekennzeichnet, dass**
die wenigstens zwei Lagen (11) Graphitfolie mittels wenigstens eines form- und kraftschlüssig in die beiden Lagen (11) eingreifenden Verbindungsstifts (13) miteinander verbunden sind.

3. Schichtverbundwerkstoff nach Anspruch 1 oder 2,
**dadurch gekennzeichnet, dass**
die Längsachse (L) des wenigstens einen Verbindungsstifts (13) rechtwinklig oder schräg in Bezug auf die flächige Erstreckung (E) des Schichtverbundwerkstoffs verläuft.

4. Schichtverbundwerkstoff nach zumindest einem der vorstehenden Ansprüche,
**dadurch gekennzeichnet, dass**
zumindest ein Ende des wenigstens einen Verbindungsstifts (13) um einen Pufferabstand gegenüber der nächstliegenden Außenfläche des Schichtverbundwerkstoffs zurückversetzt ist.

5. Schichtverbundwerkstoff nach zumindest einem der vorstehenden Ansprüche,
**dadurch gekennzeichnet, dass**
die wenigstens zwei Lagen (11) Graphitfolie ausschließlich mittels des wenigstens einen Verbindungsstifts (13) und insbesondere verklebungsfrei miteinander verbunden sind.

6. Schichtverbundwerkstoff nach zumindest einem der vorstehenden Ansprüche,
**dadurch gekennzeichnet, dass**
die wenigstens zwei Lagen (11) Graphitfolie und bevorzugt jede der wenigstens zwei Lagen Graphitfolie eine Dicke zwischen 0,2 mm und 10 mm und bevorzugt zwischen 1 mm und 3 mm aufweisen/aufweist.

7. Schichtverbundwerkstoff nach zumindest einem der vorstehenden Ansprüche,
**dadurch gekennzeichnet, dass**
der Schichtverbundwerkstoff eine Gesamtdicke zwischen 2 mm und 50 mm, bevorzugt zwischen 4 mm und 40 mm und besonders bevorzugt zwischen 5 mm und 30 mm aufweist.

8. Schichtverbundwerkstoff nach zumindest einem der vorstehenden Ansprüche,
**dadurch gekennzeichnet, dass**
der Schichtverbundwerkstoff wenigstens 3, bevorzugt zwischen 3 und 50, besonders bevorzugt 3 bis 5 und ganz bevorzugt 4 oder 5 Lagen (11) Graphitfolie umfasst.

9. Schichtverbundwerkstoff nach Anspruch 8,
**dadurch gekennzeichnet, dass**
die wenigstens drei Lagen (11) Graphitfolie mittels wenigstens zwei Verbindungsstiften (13) miteinander verbunden sind, wobei jeder der wenigstens zwei Verbindungsstifte (13) lediglich in zwei benachbarte Lagen (11) der wenigstens drei Lagen (11) Graphitfolie eingreift.

10. Schichtverbundwerkstoff nach zumindest einem der vorstehenden Ansprüche,
**dadurch gekennzeichnet, dass**
der wenigstens eine Verbindungsstift (13) aus einem Material gefertigt ist, das aus der Gruppe ausgewählt ist, welche aus Kohlenstoff, Graphit, Kohlenstofffasern enthaltenden Verbundwerkstoffen, Filzen, Siliciumcarbid, Metallen, Keramikwerkstoffen und beliebigen Kombinationen von zwei oder mehr der vorgenannten Materialien besteht.

11. Schichtverbundwerkstoff nach zumindest einem der vorstehenden Ansprüche,
**dadurch gekennzeichnet, dass**
der wenigstens eine Verbindungsstift (13) einen Außendurchmesser zwischen 1 mm und 5 mm, bevorzugt zwischen 1,5 mm und 4 mm und besonders bevorzugt zwischen 2 mm und 3 mm aufweist.

12. Schichtverbundwerkstoff nach zumindest einem der vorstehenden Ansprüche,
**dadurch gekennzeichnet, dass**
der wenigstens eine Verbindungsstift (13) eine Länge aufweist, welche geringer ist als die Summe der Dicken der durch den Verbindungsstift (13) miteinander verbundenen Lagen (11) Graphitfolie.

13. Schichtverbundwerkstoff nach zumindest einem der vorstehenden Ansprüche,
**dadurch gekennzeichnet, dass**
in jeder der wenigstens zwei Lagen (11) Graphitfolie eine Aussparung (14) zur Aufnahme des wenigstens einen Verbindungsstifts (13) vorgesehen ist.

14. Bauteil, insbesondere Dichtung, welches wenigstens einen Schichtverbundwerkstoff nach zumindest einem der vorstehenden Ansprüche umfasst.

15. Verwendung eines Schichtverbundwerkstoffs nach einem der Ansprüche 1 bis 13 und/oder eines Bauteils nach Anspruch 14 als Dichtung, insbesondere bei einer Temperatur von mindestens 600°C, bevorzugt von mindestens 800°C, besonders bevorzugt von mindestens 1000°C und ganz besonders bevorzugt von mindestens 1800°C.

## Claims

1. Layered composite material, comprising at least two layers (11) of graphite foil, **characterised in that**
at least two layers (11) of graphite foil are connected to one another by means of at least one connecting pin (13) which at least form-fittingly engages in the two layers (11),

2. Layered composite material according to claim 1,
**characterised in that**
the at least two layers (11) of graphite foil are interconnected by means of a connecting pin (13) which form-fittingly and frictionally engages in the two layers (11).

3. Layered composite material according to either claim 1 or claim 2,
**characterised in that**
a longitudinal axis (L) of the at least one connecting pin (13) extends perpendicularly or obliquely with respect to the planar extension (E) of the layered composite material.

4. Layered composite material according to at least one of preceding claims, **characterised in that**
at least one end of the at least one connecting pin (13) is recessed with respect to the closest outer surface of the layered composite material by a buffer distance.

5. Layered composite material according to at least one of the preceding claims, **characterised in that**
the at least two layers (11) of graphite foil are interconnected solely by means of the at least one connecting pin (13) and in particular without bonding.

6. Layered composite material according to at least one of the preceding claims, **characterised in that**
the at least two layers (11) of graphite foil and preferably each of the at least two layers of graphite foil have a thickness of between 0.2 mm and 10 mm and preferably of between 1 mm and 3 mm.

7. Layered composite material according to at least one of the preceding claims, **characterised in that**
the layered composite material has a total thickness of between 2 mm and 50 mm, preferably of between 4 mm and 40 mm and more preferably of between 5 mm and 30 mm.

8. Layered composite material according to at least one of the preceding claims, **characterised in that**
the layered composite material has at least 3, preferably between 3 and 50, more preferably 3 to 5 and most preferably 4 or 5 layers (11) of graphite foil.

9. Layered composite material according to claim 8,
**characterised in that**
the at least two layers (11) of graphite foil are interconnected by means of at least two connecting pins (13), each of the at least two connecting pins (13) engaging only in two adjacent layers (11) of the at least three layers (11) of graphite foil.

10. Layered composite material according to at least one of the preceding claims, **characterised in that**
the at least one connecting pin (13) is made of a material selected from the group consisting of carbon, graphite, composite materials containing carbon fibres, felt, silicon carbide, metals, ceramic materials and any combinations of two or more of the aforementioned materials.

11. Layered composite material according to at least one of the preceding claims, **characterised in that**
the at least one connecting pin (13) has an outer diameter of between 1 mm and 5 mm, preferably of between 1.5 mm and 4 mm and more preferably of between 2 mm and 3 mm.

12. Layered composite material according to at least one of the preceding claims, **characterised in that**
the at least one connecting pin (13) has a length that is shorter than the sum of the thicknesses of the layers (11) of graphite foil interconnected by means of the connecting pin (13).

13. Layered composite material according to at least one of the preceding claims, **characterised in that**
a recess (14) for receiving the at least one connecting pin (13) is provided in each of the at least two layers (11) of graphite foil.

14. Component, in particular a seal, comprising at least one layered composite material according to at least one of the preceding claims,

15. Use of a layered composite material according to any of claims 1 to 13 and/or of a component according to claim 14 as a seal, in particular at a temperature of at least 600 °C, preferably of at least 800 °C, more preferably of at least 1000 °C and most preferably of at least 1800 °C.

## Revendications

1. Matériau composite stratifié comprenant au moins deux couches (11) de feuilles de graphite,
**caractérisé en ce que**
au moins deux couches (11) de feuilles de graphite sont liées l'une à l'autre à l'aide d'au moins une broche de liaison (13) engagée au moins en complémentarité de forme dans les deux couches (11).

2. Matériau composite stratifié selon la revendication 1,
**caractérisé en ce que**
les au moins deux couches (11) de feuilles de graphite sont liées l'une à l'autre à l'aide d'au moins une broche de liaison (13) engagée en complémentarité de forme et de force dans les deux couches (11),

3. Matériau composite stratifié selon la revendication 1 ou 2,
**caractérisé en ce que**
l'axe longitudinal (L) d'au moins une broche de liaison (13) est perpendiculaire ou de biais par rapport à l'étendue (E) plane du matériau composite stratifié.

4. Matériau composite stratifié selon au moins l'une quelconque des revendications précédentes
**caractérisé en ce que**
au moins une extrémité de l'au moins une broche de liaison (13) est décalée d'un écart d'amortissement par rapport à la surface extérieure adjacente la plus proche du matériau composite stratifié.

5. Matériau composite stratifié selon au moins l'une quelconque des revendications précédentes,
**caractérisé en ce que**
les au moins deux couches (11) de feuilles de graphite sont liées l'une à l'autre uniquement à l'aide d'au moins une broche de liaison (13) et, notamment, sans être collées.

6. Matériau composite stratifié selon au moins l'une quelconque des revendications précédentes,
**caractérisé en ce que**
les au moins deux couches (11) de feuilles de graphite et, de préférence, chacune des au moins deux couches de feuilles de graphite, présente/présentent une épaisseur comprise entre 0,2 mm et 10 mm et, de préférence, entre 1 mm et 3 mm.

7. Matériau composite stratifié selon au moins l'une quelconque des revendications précédentes,
**caractérisé en ce que**
le matériau composite stratifié présente une épaisseur totale comprise entre 2 mm et 50 mm, de préférence entre 4 mm et 40 mm et, en particulier entre 5 mm et 30 mm.

8. Matériau composite stratifié selon au moins l'une quelconque des revendications précédentes,
**caractérisé en ce que**
le matériau composite stratifié comporte au moins 3, de préférence entre 3 et 50, de préférence encore 3 à 5 et, tout particulièrement 4 ou 5 couches (11) de feuilles de graphite.

9. Matériau composite stratifié selon la revendication 8,
**caractérisé en ce que**
les au moins trois couches (11) de feuilles de graphite sont liées les unes aux autres à l'aide d'au moins deux broches de liaison (13), chacune des au moins deux broches de liaison (13) n'étant insérée que dans deux couches (11) adjacentes des au moins trois couches (11) de feuilles de graphite.

10. Matériau composite stratifié selon au moins l'une quelconque des revendications précédentes,
**caractérisé en ce que**
l'au moins une broche de liaison (13) est conçue dans un matériau sélectionné dans le groupe composé de carbone, de graphite, de matériaux composites contenant des fibres de carbone, de feutrages, de carbure de silicium, de métaux, de matériaux céramiques et autres combinaisons de deux ou plusieurs matériaux énoncés précédemment.

11. Matériau composite stratifié selon au moins l'une quelconque des revendications précédentes
**caractérisé en ce que**
l'au moins une broche de liaison (13) présente un diamètre extérieur compris entre 1 mm et 5 mm, de préférence entre 1,5 mm et 4 mm et de préférence encore entre 2 mm et 3 mm.

12. Matériau composite stratifié selon au moins l'une quelconque des revendications précédentes,
**caractérisé en ce que**
l'au moins une broche de liaison (13) présente une longueur inférieure à la somme des épaisseurs des couches (11) de feuilles de graphite reliées entre elles par la broche de liaison (13).

13. Matériau composite stratifié selon au moins l'une quelconque des revendications précédentes,
**caractérisé en ce que**
dans chacune des au moins deux couches (11) de feuilles de graphite un évidement (14) est prévu afin de recevoir l'au moins une broche de liaison (13).

14. Composant, notamment un joint, comprenant au moins un matériau composite stratifié selon au moins l'une quelconque des revendications précédentes

15. Utilisation d'un matériau composite stratifié selon l'une des revendications 1 à 13 et/ou d'un composant selon la revendication 14 sous forme de joint, notamment à une température d'au moins 600 °C, de préférence d'au moins 800 °C, de préférence encore d'au moins 1000 °C et tout particulièrement d'au moins 1800 °C.
